# NEW EUROPEAN PATENT SPECIFICATION

(11) **EP 3 461 703 B2**
(45) Date of publication and mention of the opposition decision: **14.08.2024**
(45) Mention of the grant of the patent: 23.12.2020
(21) Application number: 17193508.3
(22) Date of filing: 27.09.2017
(51) Int. Cl.: B60T 8/18, B60T 13/66, B60T 17/22, H04L 12/66

(54) **INTEGRATED BRAKE CONTROL SYSTEM AND METHOD FOR RAIL VEHICLES**
INTEGRIERTES BREMSSTEUERUNGSSYSTEM UND -VERFAHREN FÜR SCHIENENFAHRZEUGE
SYSTÈME DE COMMANDE DE FREIN INTÉGRÉ ET PROCÉDÉ POUR VÉHICULES SUR RAILS

(43) Date of publication of application: 03.04.2019
(73) Proprietor: KNORR-BREMSE Systeme für Schienenfahrzeuge GmbH, 80809 München (DE)
(72) Inventor: Braun, Achim, 82152 Planegg (DE); Riediger, Oliver, 81547 München (DE); Furtwängler, Ralf, 81379 München (DE)
(74) Representative: Prüfer & Partner mbB Patentanwälte · Rechtsanwälte

(56) References cited:
- EP-A1- 2 705 994
- EP-A1- 3 179 674
- DE-A1- 19 848 990
- US-A1- 2005 251 604

## Description

The present invention relates to a brake control system comprising a central control apparatus for controlling the brake system in a rail vehicle, a local control apparatus for providing brake control in the rail vehicle, and a method of controlling a brake system in the rail vehicle.

A current standard communications design in a railway vehicle comprises a Controller Area Network (CAN) bus which enables data to be communicated along the train between devices including brake control units. This enables use of standard laptop computers to operate diagnostic software and the like, which laptops can be plugged into the CAN bus and be used to communicate with the brake control units.

DE 198 48 990 A1 discloses a central control apparatus for controlling a brake system in a rail vehicle. The apparatus comprises a first interface means for providing access to a first bus system for communication to an external control system, a gateway means, a second interface means for providing access to a second bus system for connecting local application devices of the brake system and control means for providing brake-control specific application logic for the local application devices of a vehicle segment of the rail vehicle via the second interface means.

In US 2005/0251604 A1, a method and a protocol for diagnostics of arbitrarily complex networks of devices are disclosed, wherein two functionally identical devices that communicate on different buses can have different application-layer implementations.

EP 3 179 674 A1 shows a configurable gateway apparatus and method for a integrated brake control system in railway vehicle. The brake control system a dual bus system and it can have a configurable gateway, whereby a master-slave cooperation concept can be provided between a gateway apparatus and components of a unit device of a distributed brake control system.

In EP 2 705 994 A1, a control arrangement for a rail vehicle is disclosed. The control arrangement comprises two control devices respectively associated to a driver stand. A control unit of a first one of the control devices may assume a role of a master control unit and the other one of the control devices may assume a role of a slave control unit.

The US 2014/0257604 A1 discloses a braking system with a brake control unit for a railway vehicle having first and second cores. The first core is responsible for brake control functions and the second core is responsible for communications. A switch controls communication between the second core and a communication bus on the railway vehicle to safeguard the braking function of the first core. The second core only has write access to the communication bus when enabled by the first core, which first core determines whether the system is in a defined safe state to safeguard the braking function. This reduces the testing requirements for new communications software.

However, such a dual-core approach requires support of base or core software interfaces of existing products. Such compatibility would mean keeping disadvantages of existing systems within the new system and would thus cause an unacceptable increase in complexity for developers and/or users.

It is therefore an object of the present invention to provide an improved brake control system with a simple system configuration that is not restricted in its functional range and open for upgrades.

This object is solved by a brake system according to claim 1, a method according to claim 11 and a computer program product according to claim 12.

Accordingly, a central control apparatus is provided for controlling a brake system in a rail vehicle, wherein first interface means provide access to a first bus system for communication of a higher logic level of a gateway functionality to at least one external vehicle-specific control system of the rail vehicle, and wherein a second interface means provides access to a second bus system for connecting local application devices of the brake system, so that control means of the central control apparatus may use the second interface means for providing a brake-control specific application logic of a lower logic level for local application devices of a vehicle segment of the rail vehicle via the second interface means. The brake-control specific application logic is then received via the second bus system by interface means of local control apparatuses for providing brake control in the vehicle segment of the rail vehicle in response to the brake-control specific application logic.

The brake system may comprise at least one central control apparatus, at least one local control apparatus and the first and second bus systems.

The proposed control method comprises connecting local control apparatuses via the second bus system to the central control apparatus, signaling the brake-control specific application logic to the local control apparatus via the second bus system, and providing external access to the central control apparatus via the first bus system. This method may be implemented by a computer program product comprising code means for producing the above steps when run on a computer device. The computer program product may be provided on a computer readable medium or may be downloadable from a local or public network, such as the internet.

The suggested integrated brake control system enables centralization of project specific functions, wherein one powerful central processing unit (CPU) module provided in the central control apparatus provides application logic for a vehicle segment, wherein the railway vehicle (e.g. train) can be built up of several segments which can be organized in consists, and wherein the central control apparatus may also be capable of implementing train functionality and coordinating consists and segments. Moreover, standard functions (which may be called local applications) may run on remote local application devices which comprise the local control apparatuses, so that the local applications are configurable, e.g., by generic software, to thereby provide enhanced system standardization.

The proposed integrated brake control system structure can be implemented as a configurable system with a software or process structure of a high level of abstraction from actual software and communication interfaces, so that a user can place his/her focus on the design of a control system for braking a train. Interfaces to higher-level communication systems (e.g. MVB, CAN open, PROFI Net etc.) can be generic and - as far as possible - identical in their usage. Moreover, suitable tools can be provided for supporting the users on their engineering work.

Software packages provided for controlling the central and local control apparatuses can be implemented as modular core software packages covering typical functions for brake systems and also including basic error handling and configuration checks. The communication handling and mapping of data between the central control apparatus and the local control apparatus can be implemented in the core of the software package.

The proposed new architecture of the brake system can be partly implemented on existing brake control hardware (such as ESRA, MBS, EPC or EP 2002) in the local control apparatuses. However, base or core software interfaces of existing products do not need to be supported, so that disadvantages of existing systems do not need to be kept in the new brake control system and unacceptable increase in complexity for the developers and/or users can be prevented.

With the proposed integrated brake control system various electronic brake control platforms can be merged, so that very special or brake system independent functions (e.g. compressor control) can be realized only once in future, but will be available for all families. The simple system configuration allows significant reduction of project specific hours and central project specific logic simplifies testing and reduces test efforts. If sufficient processing power is provided at the central control apparatuses, distribution of project specific functionality can be made obsolete.

Furthermore, the proposed integrated brake control system can be implemented in a framework of open technology that is not restricted to an actual functional range. The whole system is open for new functions and products that can be easily integrated. Software installation is simplified and upgrades can be used to reduce efforts for customers. Moreover, improved software consistency checks can be provided, where the brake system checks whether all installed components are supplied with correct software and configurations. Inconsistencies may either be solved or clearly indicated with severe diagnosis messages.

Optionally, the central control apparatus may have a master control status and the local control apparatus or local application devices may have a slave control status. Thereby, a master-slave cooperation concept can be provided between the central control apparatus and the local control apparatus, so that all local control apparatuses in the brake control system obey the commands or arrangement of the central control apparatus. The central control apparatus can thus also be called master control apparatus, and the local control apparatuses can be called slave control apparatuses. The master control apparatus sends its commands or arrangements to the slave control apparatus, and the slave control apparatus will act as the master control apparatus instructs providing the feedbacks and results to the master control apparatus. A major advantage of this cooperation concept is the benefit from the master-center relationship. The master control apparatus takes care of all its slave control apparatuses, providing them with tasks (e.g. brake control specific tasks), solving their conflicts and getting their partial results combined to a final format. Thereby the master control apparatus has a global view of the master-slave subsystem formed by itself and its slaves. So the slave control apparatuses in this subsystem can be efficiently coordinated to make sure that every slave control apparatus is properly working on its task. During a problem solving process, the master control apparatus can adjust the slaves work according to the current state. Thereby, potential conflicts can be avoided before they take place. And, if any conflict arises, the master control apparatus will discover it and solve it. In this way, the slave control apparatuses do not have to spend much time on negotiating with each other and the process of planning is simplified. Moreover, the design of the slave control apparatuses can be simplified and the communication costs on coordinating the slave control apparatuses can be kept low.

As another option, the second bus system may be a redundant dual-bus system. Thereby, a safe and reliable communication between the central control apparatus and the local control apparatuses can be achieved. As an example, the central control apparatus may be adapted to control a periodicity of messages based on their priority, if one bus of the dual-bus system fails. Thereby, it can be ensured that messages of higher priority are signaled more often to enhance reliability. As an example, the second bus system may comprise a CAN bus.

As a further option, the second bus system may be adapted to connect across different cars of the railway vehicle. In this case, a central control apparatus may be used for controlling local control apparatuses of several cars.

As another option, the gateway means of the central control apparatus may be adapted to use standardized communication via the first interface means and the first bus system. This provides the advantage that the integrated brake control system can be accessed via standardized communication and can thereby be integrated in conventional systems.

As a still further option, the first interface means may provide a central maintenance access for the brake system.

As another still further option, the control means of the local control apparatus may be adapted to provide brake control functions with standardized configurable software programs. Thereby, the proposed brake control system can be implemented as an open system, so that new or enhanced brake control functions may easily be incorporated into the system. More specifically, the brake control of the local control apparatuses may comprise at least one of wheel slide protection, pressure control and detection of unstable running.

It is noted that the central and local control apparatuses may be implemented based on discrete hardware circuitry with discrete hardware components, an integrated chip, or an arrangement of chip modules, or based on a single processing device or chip controlled by a software routine or program stored in a memory, written on a computer readable medium, or downloaded from a network, such as the internet,

It shall further be understood that a preferred embodiment of the invention can also be any combination of the dependent claims or above embodiments with the respective independent claim.

The present invention will now be described based on embodiments with reference to the accompanying drawings in which:
- Fig. 1: shows a schematic block diagram of an integrated brake control system according to various embodiments;
- Fig. 2: shows a schematic network structure of the integrated brake control system according to various embodiments with its different logic levels of communication;
- Fig. 3: shows a schematic block diagram of a vehicle segment with dual-redundant central control according to a first embodiment;
- Fig. 4: shows a schematic block diagram of a vehicle segment with dual-redundant central control and passenger coaches with no central control according to a second embodiment;
- Fig. 5: shows a schematic block diagram of a locomotive system with dual-redundant central control according to a third embodiment;
- Fig. 6: shows a schematic block diagram of a control structure of a single segment train according to a fourth embodiment; and
- Fig. 7: shows a schematic block diagram of a locomotive architecture according to a fifth embodiment.

In the following, preferred embodiments of the present invention will be described on the basis of an integrated brake control system with a modular framework consisting of hardware framework components driven by a software framework, which provide a high level of standardization and efficient tooling using existing electronic hardware as well as new hardware products.

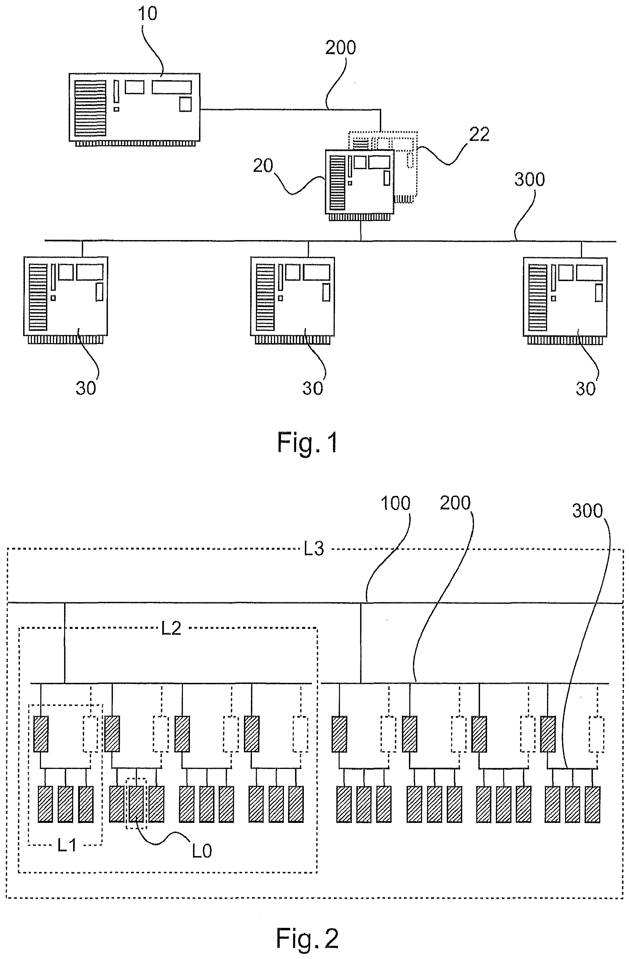

Fig. 1 shows a schematic block diagram of a brake control system according to various embodiments, wherein a train control and management system with a central controller 10 and a train or consist level bus 200 for train network communications is connected to a central intelligence device (CID) 20 of the brake control system. If a redundant system architecture is implemented, an optional redundant CID 22 may be provided for redundant control. A project specific logic which comprises brake algorithms and the like is implemented on the CIDs 20, 22. Furthermore, the CIDs 20, 22 of the brake control systems are connected via a first interface to the standardized consist or train level bus 200 and via a second interface to a safety network bus 300 which provides generic communication based on an application interface descriptor (AID) on a segment level (level 1), while the communication on the consist bus is a higher level communication of level 2 and the communication on the train bus is an even higher communication level of level 3, as explained later.

Furthermore, local application devices (LAD) 30 on which local applications (LA) for specific local brake controls are running, are connected to the safety network bus 300 via respective interfaces.

The CIDs 20, 22 comprise central control apparatuses for controlling communication via the higher level consist or train level bus via the first interface and for controlling communication on the segment level safety network bus 300 via the second interface for providing brake-control specific application logic for local control apparatuses provided at the local application devices 30.

The central control apparatus at the CIDs 20, 22 may be implemented as a powerful CPU module which provides the application logic for brake control of the segment. A train may be built of several segments (which can be organized in consists), wherein the CIDs 20, 22 may also be capable of implementing train functionality, coordinating consists and segments.

Standard brake control functions (called local applications (LA)) are running on the remote local application devices 30 and may be implemented as configurable, generic software to thereby force system standardization.

The CIDs 20, 22 provide project-specific brake control system application logic for the controlled vehicle segment and the gateway functionality to the higher communication levels of the consist or train level bus 200. All CIDs of the train may support the same software and may use the same electronic circuit design. However, form factor and connectors may differ to enable integration into different products. The local application devices 30 provide input/output (I/O) interfaces to vehicle hardware (i.e. brake control hardware or the like) and support primary functions of brake control. Complexity of the local application devices 30 may vary on a wide range. Simple I/O LADs 30 supporting electrical interfaces e.g. to a wired train bus or any pneumatic components may be provided. On the other hand, very complex LADs 30 supporting service brake control, WSP, load calculation, diagnosis, etc. may be provided as well. The LADs 30 may comprise new or existing electronic hardware.

The control between the CIDs 20, 22 and the LADs 30 can be based on a master-slave principle, wherein the CIDs 20, 22 act as brake control masters with a master status and the LADs 30 act as brake control slaves with a slave control status. The CIDs 20, 22 are configured to provide a central brake control function, which may be the only part in a system with project-specific logic of the brake control system. The safety network bus 300 connects the master CIDs 20, 22 and the slave LADs 30 within a train segment or car and possibly also across train segments and cars and is configured to provide a generic, safe and reliable communication. As an example, it may be realized as a redundant dual CAN bus.

The slave LADs 30 may be provided with local brake control functions implemented by standardized configurable software and may be directed to wheel slide protection, pressure control, detection of unstable running and the like.

The redundant master CID 22 may operate in a hot standby state to increase availability. The hot standby state is a redundant state in which the redundant CID 22 runs simultaneously with the non-redundant CID 20. Upon failure of the non-redundant CID 20, the redundant CID 22 in the hot standby state immediately takes over the role of the non-redundant CID 20 and replaces its functions. Data may be mirrored in real time, so that both devices have identical data. The hot standby state ensures system reliability and security by having the redundant CID 22 ready to take over in the event of a failure of the non-redundant CID 20.

The slave LADs 30 send their data to both CIDs 20, 22, which both process the data, but only the active CID 20 sends its data on the safety network bus 30.

The safety network bus 300 may be adapted to provide a proprietary mechanism which ensures that in case of failure of one bus in a dual-bus configuration high priority messages are delivered with same periodicity and normal messages are delivered with half of the periodicity of the error-free case. Thereby, high priority messages are delivered more often through the remaining single bus than normal messages.

Each master-CID 20, 22 may host two micro controllers with sufficient performance for providing the central brake control function and comprises a central interface to the train control and management system via the consist or train level bus 200. It may run all project-specific software and enable standardized communication.

Furthermore, the CIDs 20, 22 may provide a central maintenance point for software installation, data lodging, etc. Thereby, separate maintenance control for each brake control segment can be provided.

Additionally, a designer tool chain with system view can be provided as an integrated tool for design, simulation, debugging and testing with advanced testing capabilities.

The slave LADs 30 may have fixed, but configurable functions which can be based on software that is not project specific. Thereby, local brake control functions can be implemented with standardized configurable software and new products or functions can be easily integrated, since they only have to comply with the interface definition and logic of the safety network bus 300 of the integrated brake control system.

With the above functionalities, the integrated brake control system facilitates realization and implementation of train-wide functions such as brake management, brake force distribution and brake tests, train-wide maintenance can be achieved through a single interface (e.g. for software installation), and train-wide data logs can be synchronized. Thereby, engineering effort can be reduced and turnaround times can be shortened, while quality can be improved through usage of standardized, non-project specific functions.

Due to the fact that the proposed brake control system can be implemented on a vehicle segment basis, different vehicle segments or cars with different local brake control functions can be combined via the safety network bus 300 to achieve easy inter-operability through the whole train. Moreover, the proposed integrated brake control system allows that new train control network protocols can be developed only once.

Fig. 2 shows a schematic block diagram of a generic network structure of the proposed integrated brake control system according to various embodiments with a four-level communications network architecture which can be applied to all train builds. The CIDs and LADs described in connection with Fig. 1 are nodes on the level-1 network L1. The technology, protocols and operation of the level-1 network L1 is defined within the scope of the framework of the integrated brake control system. The implementation of the level-1 network L1 is supported by all product types of the integrated brake control system.

However, the four-level architecture provides for more than one level to exist in a train with these networks connecting devices is in one or more cars or wagons. The extent of a single-level-1 network L1 defines a CID segment as shown in Fig 1. Communication between modules within a device of the integrated brake control system or between LADs, which is not visible to the CID, occurs on a zero level L0. The implementation of the zero level L0 may differ between different product types of the integrated brake control system.

Furthermore, level-2 and level-3 communications networks L2 and L3 are provided for higher level communications on consist or train level and can be accessed via a corresponding interface provided at the CIDs. More specifically, the level-3 network L3 provides communication throughout the entire train, which may be in the form of a hard wired train bus or a communications network. The level-2 network L2 provides communication between a number of braking segments within a single consist of cars or wagons.

To summarize, the individual levels within the four-level communication architecture can be designated as train network or train bus (L3), consist network (L2), segment network (L1) and local network or bus (L0).

It is to be noted that for certain train architectures, e.g., where a train comprises a single consist or a consist of a single braking segment, parts of the four-level architecture may not be physically implemented. However, in these cases, it can be considered that a single physical network handles more than one of the logical communication levels. Furthermore, it is to be noted that the train network L3 is not restricted to braking system devices. It may be a serial communications layer or a hard-wired bus which can support coupling and decoupling of train parts during normal operation. A typical train network L3 is the Wire Train Bus (WTB) which is a field bus forming the train communication network (TCN) together with the multi-function vehicle bus (MVB).

The consist network L2 provides communication between networks and devices over a number of cars or wagons within the train. Again, communication under consist network L2 is not restricted to braking system devices. The consist network L2 may be supplied by the train builder or the brake system developer. Typical consist networks L2 are MVB, CAN open, Profi Net and Common Industrial Protocol (CIP).

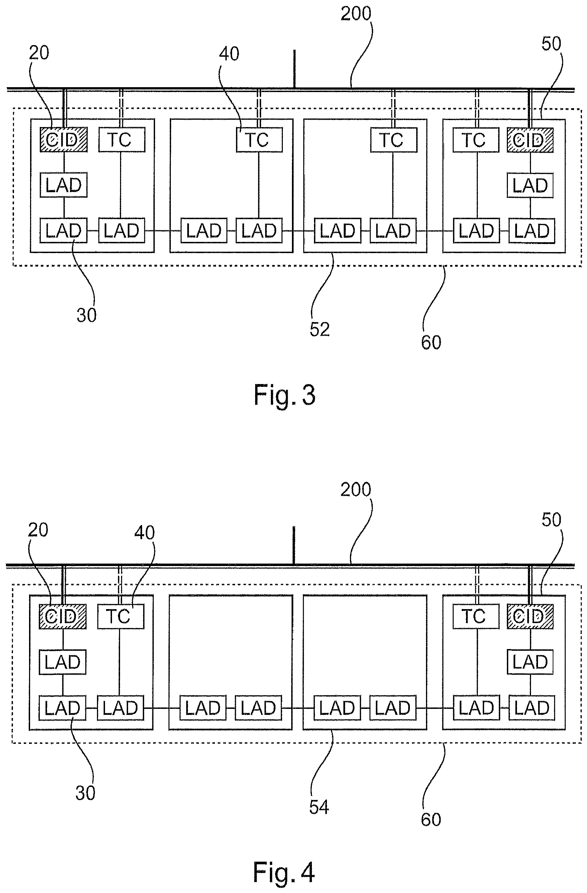

Fig. 3 shows a schematic block diagram of a generic architecture of a consist 60 according to first embodiment, which may be coupled and uncoupled during normal operation of the train. Communication between consists 60 is supported by the train network L3 which supports coupling.

The consist 60 comprises one or more CID segments 50, 52 and communication between the CID segments 50, 52 is possible via the consist network 200. Coupling and uncoupling of CID segments 50, 52 within the consist 60 may not be supported during normal operation of the train. The consist 60 comprises first CID segments 50 which comprise one or two (dual redundant) CIDs and a number of LADs, in one or more cars, which communicate over the respective safety network bus. Furthermore, second types of CID segments 52 without CIDs can be provided.

Additionally, in motor vehicles, communication with a traction control unit (TC) 40 can be implemented via the consist network 200 or by using direct I/O from LADs controlled by the CID. One prime CID which may be selected by its position and/or identification code may provide a train brake manager (TBM) functionality which coordinates brake control and brake control functions for CIDs in the entire train, communicating via the consist network L2 and train network L3.

Furthermore, the prime CID in each CID segment 50 may provide a segment brake manager functionality of its segment, which controls the braking functions provided by the LADs in its own CID segment, communicating on the safety network bus.

For a hierarchical brake management system one prime CID in each consist 60, which may be selected by its position and/or identification code, may provide a consist brake manager functionality which coordinates brake control and brake control functions for the CIDs in the vehicle consist 60, communicating via the consist network 200.

As an alternative, the generic architecture may support a flat brake management where the consist braking requirement is independently calculated by each prime CID which performs the CBM role only for its local CID segment.

Fig. 4 shows a schematic block diagram of a generic architecture according to a second embodiment for train communication and brake management with passenger coaches. Here, passenger coaches are unpowered cars, so that no traction control units are fitted and there is no additional requirement for a consist network or direct I/O interface to support traction control. Consequently, a CID segment 54 without CID 20 and TC 40 is provided.

In case of a single segment train, the train comprises a single consist which in turn comprises one CID segment. The prime CID in this segment thus performs all TBM, CBM and SBM roles.

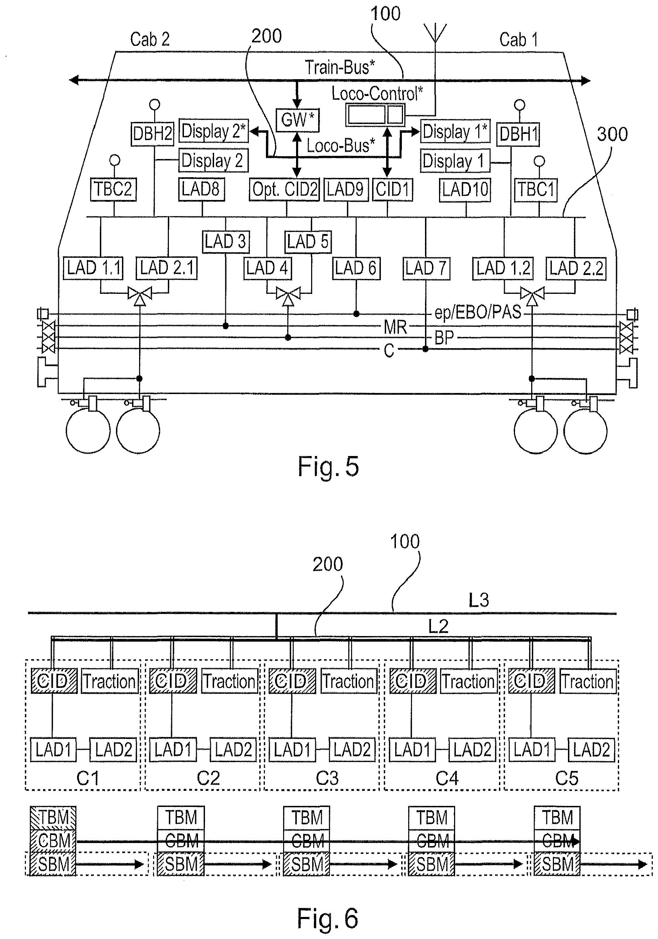

Fig. 5 shows a schematic block diagram of a communication and brake management architecture according to a third embodiment for a locomotive. As can be gathered from Fig. 5, a plurality of LADs 1.1, 1.2, 2.1, 2.2, and 3 to 10 are connected to the level-1 safety network bus 300 for providing different brake control-related functions. Furthermore, a first CID (CID 1) is provided for accessing a level-2 locomotive bus (Loco-Bus) 200 for communication with a locomotive control device. Additionally, an optional second CID (CID 2) is provided for accessing a gateway device (GW) via the locomotive bus 200 so as to provide communication to a level-3 train bus 100, which provides connection to external cars or wagons outside the locomotive.

Fig. 6 shows a schematic block diagram (upper part) of a single car segment architecture according to a fourth embodiment, and a corresponding brake manager architecture (lower part).

In the single car segment architecture of Fig. 6, cross-car level-1 communication is not supported, so that a consist comprises a number of CID segments, each of which controls the LADs in only one car C1 to C5, Each car C1 to C5 in the consist thus contains at least one CID. The use of dual redundant CIDs in this architecture is not necessarily required, as the failure of a single CID causes only a small reduction in available brake effort (i.e. one car's brake effort). The CIDS of each car provide access to the consist network 200 (L2) which provides access to the train network 100 (L3).

Thus, as shown in the lower part of Fig. 6, the CID of each car C1 to C5 provides the SBM functionality, while the CID of the first car C1 provides the CBM functionality via the consist bus 200. Optionally, the CID of the first car C1 may also provide a TBM functionality via the train network 100.

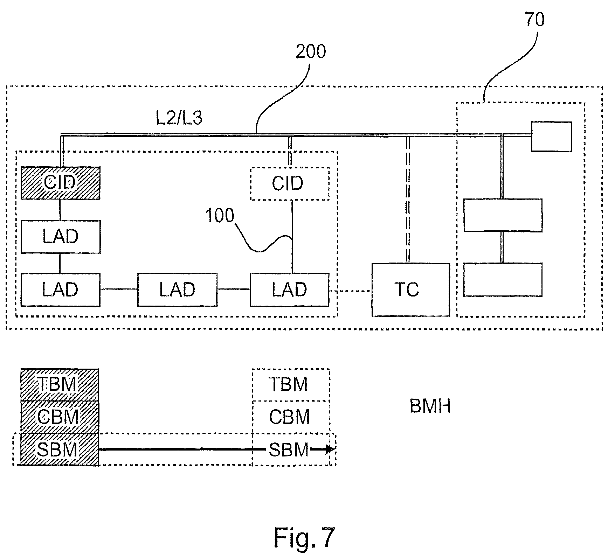

Fig. 7 shows a schematic block diagram of a communication and brake management architecture for a locomotive according to a fifth embodiment, wherein the prime CID performs all brake management roles for a single CID segment which runs within the locomotive. An additional dual-redundant CID may be implemented, but there is no communication outside the locomotive.

As shown in the lower part of Fig. 7, the brake management hierarchy (BMH) indicates that a segment brake manager functionality is provided within the single segment, while other higher-level brake manager functionalities are not provided to external functions. The higher level buses L2, L3 200 merely connect to driver control and non-brake control units 70.

In the above brake control systems according to the first to fifth embodiments, configuration data is loaded into the CIDs so as to define project specific operation of the integrated brake control system. This data may consist of brake algorithms, LAD interface data, CID data and LAD data. The brake algorithms may be project-specific logics which define braking operations of the integrated brake control system. A brake algorithm may be defined within the configuration data loaded into the CID. There might be a non-safety relevant logic which is usually not directly related to brakes. Furthermore, the LAD interface data may be a component of the configuration data, which defines the interfaces for all local applications running in the brake control system. This data may be derived from the application interface descriptors for the local applications. The CID data may provide any project specific data required to configure the operation of the CID independent of the brake algorithm this includes configuration of level-2 communication, configuration of an Ethernet maintenance interface and definition of CID segments built for the project. Finally, LAD data may be a component of the configuration data, which holds data passed to the LADs to configure their operation. This data may be sent to the appropriate LADs by the CID and may be stored in the LAD to replace any previous or default configuration data stored therein. The Ethernet maintenance port configuration data may be used to configure the operation of an Ethernet maintenance port to provide project specific functionality or labeling.

The application interface descriptor may provide a full description of a local application as run on a specific LAD. The full application interface descriptor may be used by a designer tool of the integrated brake control system to generate configuration data for the brake control system, to determine communication bus loading, generate system documents and for configuration control of the project specific application. Additionally, a subset of the application interface descriptor may be held as application interface descriptor data in the configuration data loaded into the CID. In order to ensure consistency between the operation of the LADs and the project specific application held in the CID, the CID may validate this application interface descriptor data against that received from the LAD describing the local application it is running.

Furthermore, the CID core may be a non-application specific component of the CID software. This may be a software built, maintained and tested as a separate entity from the configuration data which defines the project specific functionality of the integrated brake control system.

As already mentioned above, the CID may also act as a gateway when it provides an interface between its brake control segment and a higher level communications network (i.e. consist bus or train bus). The ability of the CID to act as a gateway to different networks may be provided on the hardware side by a standard hardware interface to support external network communication standards. On the software side, a CID communications core, which is used to handle interfaces to the level-2 communications network and to the maintenance tools, is provided to support the API software required for various network technologies.

It is noted that present invention is not restricted to the above preferred embodiments and can be implemented in any brake systems of trains, locomotives, coaches, freight cars, trams, metros, monorails, specific rail vehicles or on-track machines. Furthermore, the proposed brake control framework defines a modular architecture whereby applications for various braking technologies and their combinations are supported, such as pneumatic brakes, hydraulic brakes, electro-dynamic brakes, electro-magnetic track brakes, electro-magnetic brakes, eddy current brakes and hydrodynamic brakes. Other technologies might be supported by developing additional LADs which are compliant to the integrated brake control framework. Moreover, the integrated brake control framework may provide tools for various states in the implementation of a braking project, such as system configuration, allocation of brake functions, brake system logic design, testing and maintenance.

**Description (amended paragraphs, clean copy)**

## Claims

1. A brake system comprising:
at least one central control apparatus (20) for controlling a brake system in a rail vehicle, said central control apparatus (20) comprising:
- first interface means for providing access to a first bus system (200) for communication of a higher communication level of a gateway functionality to at least one external vehicle-specific control system of said rail vehicle;
- second interface means for providing access to a second bus system (300) for connecting local application devices of said brake system;
- gateway means for providing said gateway functionality between the first bus system (200) and the second bus system (300); and
- control means for providing project-specific brake-control specific application logic of a lower communication level which comprises brake algorithms for said local application devices (30) of a vehicle segment of said rail vehicle via said second interface means,
at least one local control apparatus (30) which is adapted to be controlled by the central control apparatus in order to provide brake control in a vehicle segment of a rail vehicle, said local control apparatus (30) comprising:
- interface means for providing access to the bus system (300); and
- brake control means for providing said brake control in response to a brake-control specific application logic received by said interface means via said bus system (300), and
said first and second bus systems (200, 300),
wherein the first bus system (200) is a standardized consist or train level bus,
the second bus system (300) is a safety network bus,
the brake-control specific application logic is project specific, comprises brake algorithms and is implemented on the central control apparatus,
said brake control means is adapted to provide brake control functions with standardized configurable software programs, and
the central control apparatus comprises a central control apparatus communication core on a software side that is configured to handle the first interface means and interface means to maintenance tools and wherein the central control apparatus communication core is configured to support the API software required for various network technologies.

2. The system according to claim 1, wherein said apparatus (20) has a master control status and being configured to communicate with said local application devices (30) having a slave control status.

3. The system according to claim 1 or 2, wherein said second bus system (300) is a redundant dual-bus system.

4. The system according to claim 3, wherein said apparatus (20) is adapted to control a periodicity of messages based on their priority, if one bus of said dual-bus system fails.

5. The system according to claim 3 or 4, wherein said second bus system (300) is adapted to connect across different cars of said railway vehicle.

6. The system according to any of the preceding claims, wherein said gateway means is adapted to use standardized communication via said first interface means and said first bus system (200).

7. The system according to any of the preceding claims, wherein said first interface means provides a central maintenance access for said brake system.

8. The system according to any of the preceding claims, wherein said brake control comprises at least one of wheel slide protection, pressure control and detection of unstable running.

9. The system according to any of the preceding claims, wherein said at least one central control apparatus (20) comprises a redundant central control apparatus (22), and wherein said local control apparatus (30) is adapted to send its data to both said central control apparatus (20) and said redundant central control apparatus (22).

10. The system according to any of the preceding claims, wherein said redundant central control apparatus (22) is adapted to operate in a hot standby state.

11. A method of controlling a brake system according to any of the preceding claims in a rail vehicle, said method comprising:
- connecting local control apparatuses (30) via a second bus system (300) to a central control apparatus (20);
- providing a project specific brake-control specific application logic to said local control apparatus (30) via said second bus system (300) and
- providing external access to said central control apparatus (20) via a first bus system (200).

12. A computer program product comprising code means for producing the steps of method claim 11 when run on a computer device.

## Patentansprüche

1. Bremssystem, umfassend:
mindestens eine zentrale Steuervorrichtung (20) zum Steuern eines Bremssystems in einem Schienenfahrzeug, wobei die zentrale Steuervorrichtung (20) Folgendes umfasst:
- ein erstes Schnittstellenmittel zum Bereitstellen von Zugriff auf ein erstes Bussystem (200) zur Kommunikation einer höheren Kommunikationsebene einer Gateway-Funktionalität an mindestens ein externes fahrzeugspezifisches Steuersystem des Schienenfahrzeugs;
- ein zweites Schnittstellenmittel zum Bereitstellen von Zugriff auf ein zweites Bussystem (300) zum Verbinden lokaler Anwendungseinrichtungen des Bremssystems;
- ein Gateway-Mittel zum Bereitstellen der Gateway-Funktionalität zwischen dem ersten Bussystem (200) und dem zweiten Bussystem (300); und
- ein Steuermittel zum Bereitstellen von projektspezifischer bremssteuerungsspezifischer Anwendungslogik einer niedrigeren Kommunikationsebene, die Bremsalgorithmen für die lokalen Anwendungseinrichtungen (30) eines Fahrzeugsegments des Schienenfahrzeugs umfasst, über das zweite Schnittstellenmittel,
mindestens eine lokale Steuervorrichtung (30), die dazu angepasst ist, von der zentralen Steuervorrichtung gesteuert zu werden, um Bremssteuerung in einem Fahrzeugsegment eines Schienenfahrzeugs bereitzustellen, wobei die lokale Steuervorrichtung (30) Folgendes umfasst:
- ein Schnittstellenmittel zum Bereitstellen von Zugriff auf das Bussystem (300); und
- ein Bremssteuermittel zum Bereitstellen der Bremssteuerung als Reaktion auf eine von dem Schnittstellenmittel über das Bussystem (300) empfangenen bremssteuerungsspezifischen Anwendungslogik, und
das erste und das zweite Bussystem (200, 300),
wobei das erste Bussystem (200) ein standardisierter Consist- oder Zug-Bus ist,
das zweite Bussystem (300) ein Safety-Network-Bus ist,
die bremssteuerungsspezifische Anwendungslogik projektspezifisch ist, Bremsalgorithmen umfasst und auf der zentralen Steuervorrichtung implementiert ist,
das Bremssteuerungsmittel dazu angepasst ist, Bremssteuerungsfunktionen mit standardisierten konfigurierbaren Softwareprogrammen bereitzustellen, und
die zentrale Steuervorrichtung einen Kommunikationskern der zentralen Steuervorrichtung auf einer Softwareseite umfasst, der dazu konfiguriert ist, das erste Schnittstellenmittel und ein Schnittstellenmittel zu Wartungs-Tools zu handhaben, und wobei der Kommunikationskern der zentralen Steuervorrichtung dazu konfiguriert ist, die für verschiedene Netzwerktechnologien erforderliche API-Software zu unterstützen.

2. System nach Anspruch 1, wobei die Vorrichtung (20) einen Master-Steuerungsstatus aufweist und dazu konfiguriert ist, mit den lokalen Anwendungseinrichtungen (30) zu kommunizieren, die einen Slave-Steuerungsstatus aufweisen.

3. System nach Anspruch 1 oder 2, wobei das zweite Bussystem (300) ein redundantes Dual-Bussystem ist.

4. System nach Anspruch 3, wobei die Vorrichtung (20) dazu angepasst ist, eine Periodizität von Nachrichten basierend auf deren Priorität zu steuern, falls ein Bus des Dual-Bussystems ausfällt.

5. System nach Anspruch 3 oder 4, wobei das zweite Bussystem (300) dazu angepasst ist, eine Verbindung über unterschiedliche Waggons des Schienenfahrzeugs hinweg zu bilden.

6. System nach einem der vorangehenden Ansprüche, wobei das Gateway-Mittel dazu angepasst ist, standardisierte Kommunikation über das erste Schnittstellenmittel und das erste Bussystem (200) zu verwenden.

7. System nach einem der vorangehenden Ansprüche, wobei das erste Schnittstellenmittel einen zentralen Wartungszugang für das Bremssystem bereitstellt.

8. System nach einem der vorangehenden Ansprüche, wobei die Bremssteuerung mindestens eines von Radgleitschutz, Drucksteuerung und Detektion instabilen Laufens umfasst.

9. System nach einem der vorangehenden Ansprüche, wobei die mindestens eine zentrale Steuervorrichtung (20) eine redundante zentrale Steuervorrichtung (22) umfasst und wobei die lokale Steuervorrichtung (30) dazu angepasst ist, ihre Daten an sowohl die zentrale Steuervorrichtung (20) als auch die redundante zentrale Steuervorrichtung (22) zu senden.

10. System nach einem der vorangehenden Ansprüche, wobei die redundante zentrale Steuervorrichtung (22) dazu angepasst ist, in einem Hot-Standby-Zustand zu arbeiten.

11. Verfahren zum Steuern eines Bremssystems nach einem der vorangehenden Ansprüche in einem Schienenfahrzeug, wobei das Verfahren Folgendes umfasst:
- Verbinden von lokalen Steuervorrichtungen (30) mit einer zentralen Steuervorrichtung (20) über ein zweites Bussystem (300);
- Bereitstellen einer projektspezifischen bremssteuerungsspezifischen Anwendungslogik für die lokale Steuervorrichtung (30) über das zweite Bussystem (300) und
- Bereitstellen von externem Zugriff auf die zentrale Steuervorrichtung (20) über ein erstes Bussystem (200).

12. Computerprogrammprodukt, umfassend Code-Mittel zum Erzeugen der Schritte von Verfahrensanspruch 11, wenn auf einer Computereinrichtung ausgeführt.

## Revendications

1. Système de frein comportant :
au moins une installation (20) centrale de commande pour commander un système de frein d'un véhicule sur rail, l'installation (20) centrale de commande comportant :
- un premier moyen d'interface pour donner accès à un premier système (200) de bus pour la communication d'un niveau plus haut de communication d'une fonctionnalité de passerelle à au moins un système de commande extérieur spécifique à un véhicule du véhicule sur rail ;
- un deuxième moyen d'interface pour donner accès à un deuxième système (300) de bus pour connecter des dispositifs d'application locaux du système de frein ;
- un moyen de passerelle pour donner la fonctionnalité de passerelle entre le premier système (200) de bus et le deuxième système (300) de bus ; et
- un moyen de commande pour donner une logique d'application spécifique à la commande de frein et spécifique au programme d'un niveau plus bas de communication, qui comprend des algorithmes de frein pour les dispositifs (30) locaux d'application d'un segment de véhicule du véhicule sur rail par l'intermédiaire du deuxième moyen d'interface,
au moins une installation (30) locale de commande, qui est conçue pour être commandée par l'installation centrale de commande de manière à donner une commande de frein dans un segment de véhicule d'un véhicule sur rails, l'installation (30) locale de commande comportant :
- un moyen d'interface pour donner accès à un système (300) de bus ; et
- un moyen de commande de frein pour donner la commande de frein en réponse à une logique d'application spécifique à la commande de frein reçue par le moyen d'interface par l'intermédiaire du système (300) de bus, et
les premier et deuxième systèmes (200, 300) de bus,
dans lequel le premier système (200) de bus est un bus normalisé ou un bus de niveau de train,
le deuxième système (300) de bus est un bus de réseau sécurité,
la logique d'application spécifique à une commande de frein est spécifique au projet, comprend des algorithmes de frein et est mise en œuvre sur l'installation centrale de commande, et
le moyen de commande de frein est conçu pour fournir des fonctions de commande de frein par des programmes de logiciel configurables normalisés, et
l'installation centrale de commande comprend un noyau de communication d'installation centrale de commande d'un côté logiciel qui est configuré pour manipuler le premier moyen d'interface et des moyens d'interface pour des outils d'entretien et dans lequel le noyau de communication d'installation centrale de commande est configuré pour supporter le logiciel API nécessaire à diverses technologies de réseau.

2. Système suivant la revendication 1, dans lequel l'installation (20) a un état de commande maître et est configurée pour communiquer avec les dispositifs (30) locaux d'application ayant un état de commande esclave.

3. Système suivant la revendication 1 ou 2, dans lequel le deuxième système (300) de bus est un système à double-bus redondant.

4. Système suivant la revendication 3, dans lequel l'installation (20) est adaptée pour commander une périodicité de messages basés sur leur priorité, si un bus du système à double-bus est défaillant.

5. Système suivant la revendication 3 ou 4, dans lequel le deuxième système (300) de bus est conçu pour connecter différentes voitures du véhicule sur rails.

6. Système suivant l'une quelconque des revendications précédentes, dans lequel le moyen de passerelle est conçu pour utiliser une communication normalisée par l'intermédiaire du premier moyen d'interface et du premier système (200) de bus.

7. Système suivant l'une quelconque des revendications précédentes, dans lequel le premier moyen d'interface donne un accès central de maintenance pour le système de frein.

8. Système suivant l'une quelconque des revendications précédentes, dans lequel la commande de frein comporte au moins l'une d'une protection vis-à-vis d'un patinage de roue, d'une commande de pression et d'une détection d'une marche instable.

9. Système suivant l'une quelconque des revendications précédentes, dans lequel la au moins une installation (20) centrale de commande comporte une installation (22) centrale de commande redondante, et dans lequel l'installation (30) locale de commande est conçue pour envoyer ses données à la fois à l'installation (20) centrale de commande et à l'installation (22) centrale de commande redondante.

10. Système suivant l'une quelconque des revendications précédentes, dans lequel l'installation (22) centrale de commande redondante est conçue pour opérer dans un état de secours immédiat.

11. Procédé de commande d'un système de frein suivant l'une quelconque des revendications précédentes d'un véhicule sur rail, le procédé comportant :
- connecter des installations (30) locales de commande par l'intermédiaire d'un deuxième système (300) de bus à une installation (20) centrale de commande ;
- donner une logique d'application spécifique au contrôle de frein spécifique au programme aux installations (30) locales de commande par l'intermédiaire du deuxième système (300) de bus et
- donner un accès extérieur à l'installation (20) centrale de commande par l'intermédiaire du premier système (200) de bus.

12. Produit de programme d'ordinateur comportant un moyen de code pour produire les stades du procédé de la revendication 11, quand il se déroule sur un dispositif d'ordinateur.
